# EUROPEAN PATENT SPECIFICATION

(11) **EP 3 029 299 B1**
(45) Date of publication and mention of the grant of the patent: **02.10.2024**
(21) Application number: 15196738.7
(22) Date of filing: 27.11.2015
(51) Int. Cl.: F02C 7/22, F23K 5/04

(54) **FUEL PURGE SYSTEM AND METHOD OF PURGING**
BRENNSTOFFENTLÜFTUNGSSYSTEM UND VERFAHREN ZUR ENTLÜFTUNG
SYSTÈME DE PURGE DE CARBURANT ET PROCÉDÉ DE PURGE

(30) Priority: 02.12.2014 US 201414558279
(43) Date of publication of application: 08.06.2016
(73) Proprietor: General Electric Technology GmbH, 5400 Baden (CH)
(72) Inventor: SELFRIDGE, Kenneth Eugene, Greenville, SC South Carolina 29615 (US); BEADIE, Douglas Frank, Greenville, SC South Carolina 29615 (US); ZHANG, Hua, Greenville, SC South Carolina 29615 (US)
(74) Representative: Novagraaf Group

(56) References cited:
- EP-A2- 2 587 023
- US-A1- 2011 289 927
- US-B1- 6 256 975

## Description

### BACKGROUND OF THE INVENTION

The subject matter disclosed herein relates to gas turbine engines and, more particularly, to a fuel purge system, as well as a method of purging a combustor assembly of such gas turbine engines. EP 2 587 023 A2 describes an exemplary system for purging a turbine fuel supply system and combustor.

During various operating conditions of a gas turbine engine, it is required that liquid fuel is inhibited from entering a liquid fuel manifold. Examples of such operations include during gas fuel operation of the gas turbine engine or during a purge credit mode of the combustor assembly. This is done to protect the liquid fuel combustor nozzles and liquid fuel mixing valves. To block the liquid fuel from entering these locations, a valve assembly is employed upstream of these components and downstream of a liquid fuel supply.

Unfortunately, due to the inherent inability of a valve to perfectly seal the pipes and based on internal pressure within these pipes, it is possible for slight leakage of the liquid fuel to pass through the valve(s) and intrude the components discussed above. Systems and methods employed to combat this problem are typically costly and complicated.

### BRIEF DESCRIPTION OF THE INVENTION

According to one aspect of the invention, a fuel purge system for a gas turbine engine according to claim 1 is provided.

According to another aspect of the invention, a method of purging a gas turbine engine according to claim 8 is provided.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic illustration of a gas turbine engine; and
FIG. 2 is a schematic illustration of a liquid supply system of the gas turbine engine.

The detailed description explains embodiments of the invention, together with advantages and features, by way of example with reference to the drawings.

### DETAILED DESCRIPTION OF THE INVENTION

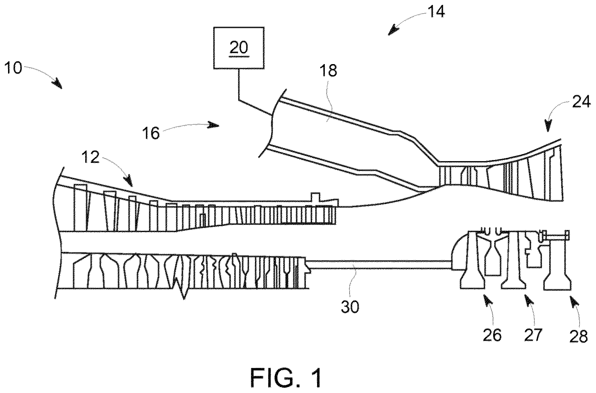

Referring to FIG. 1, a turbine system, such as a gas turbine engine 10, constructed in accordance with an exemplary embodiment of the present invention is schematically illustrated. The gas turbine engine 10 includes a compressor section 12 and a plurality of combustor assemblies arranged in a can annular array, one of which is indicated at 14. The combustor assembly is configured to receive fuel from a fuel supply system 20 through at least one fuel nozzle and a compressed air from the compressor section 12. The fuel and compressed air are passed into a combustor chamber 18 defined by a combustor liner and ignited to form a high temperature, high pressure combustion product or air stream that is used to drive a turbine 24. The turbine 24 includes a plurality of stages 26-28 that are operationally connected to the compressor 12 through a compressor/turbine shaft 30 (also referred to as a rotor).

In operation, air flows into the compressor 12 and is compressed into a high pressure gas. The high pressure gas is supplied to the combustor assembly 14 and mixed with fuel, for example natural gas, fuel oil, process gas and/or synthetic gas (syngas), in the combustor chamber 18. The fuel/air or combustible mixture ignites to form a high pressure, high temperature combustion gas stream, which is channeled to the turbine 24 and converted from thermal energy to mechanical, rotational energy. As will be appreciated from the description herein, the fuel provided is a liquid fuel, but it is to be appreciated that embodiments of the gas turbine engine 10 employ both liquid fuel and gas fuel, which may be employed during different operating conditions.

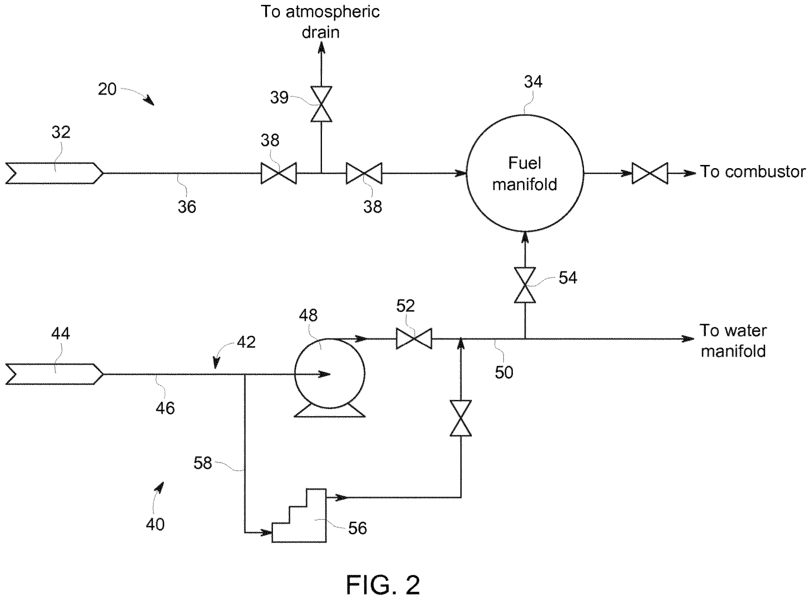

Referring now to FIG. 2, the fuel supply system 20 is illustrated in greater detail. The fuel supply system 20 includes a liquid fuel supply 32 that stores and distributes liquid fuel. The liquid fuel supply 32 is fluidly coupled to a liquid fuel manifold 34 with a liquid fuel piping arrangement 36. One or more valves 38 are included along the liquid fuel piping arrangement 36 to selectively transition between an open condition and a closed condition to control the flow rate of liquid fuel to the liquid fuel manifold 34. An atmospheric vent 39 in the form of a vent or drain is provided off of the liquid fuel piping arrangement 36. An internal pressure of the liquid fuel piping arrangement 36 is present due to the liquid fuel supply 32 being disposed at an elevated position relative to the one or more valves 38, as well as the atmospheric vent 39. Based on this internal pressure, it is possible for a leaked portion of the liquid fuel to pass through the one or more valves 38 when the valve(s) are in the closed condition.

To combat this leaked portion, pressurization of the liquid fuel manifold 34 is provided with a purge system 40. The purge system 40 is fluidly coupled to the combustor assembly 14 and is configured to purge various portions of the combustor assembly 14 with a liquid, such as water, via a water manifold. More specifically, the water is demineralized water in certain embodiments. The purge system 40 includes a liquid supply line 42 (e.g., water supply line) that is fluidly coupled to a liquid supply 44 (e.g., water supply) and a water manifold, as well as the liquid fuel manifold 34. As shown, a main portion 46 of the fluid supply line 42 is provided and routes the liquid to a liquid injection pump 48 (e.g., water injection pump) that is configured to pump the liquid to the water manifold along a liquid distribution line 50 and/or the liquid fuel manifold 34. A liquid valve 52 is provided between the liquid injection pump 48 and the liquid fuel manifold 34 to control the flow rate of liquid to the liquid fuel manifold 34. The liquid distribution line 50 includes a liquid valve 54 (e.g., water valve) that transitions between an open state and a closed state.

The liquid injection pump 48 is configured to operate at a high pressure, relative to a liquid seal pump 56 (e.g., water seal pump) that is located along a liquid line branch 58 that branches off of the main portion 46 of the fluid supply line 42. The liquid seal pump 56 is employed when the liquid injection pump 48 is not in use and is used for sealing/pressurization purposes of various portions of the fluid lines. The liquid seal pump 56 pumps liquid to the liquid fuel manifold 34 to pressurize the components therein. Pressurization opposes the leaked portion of the liquid fuel that tends to pass through the one or more valves 38, thereby reducing the likelihood of ingress of the liquid fuel to the liquid fuel manifold 34 from upstream locations along the liquid fuel piping arrangement 36.

To effectively seal the liquid fuel manifold 34 from the leaked portion of liquid fuel, the liquid pumped by the liquid seal pump 56 must exceed the internal pressure of the liquid fuel piping arrangement 36, which may vary depending upon the particular application and operating conditions. In one embodiment, the liquid seal pump 56 is configured to pump the liquid at a pressure greater than about 13789 Pa (2 psig). In another embodiment, the pressure is greater than about 20684 Pa (3 psig), which is greater than the internal pressure of the liquid fuel piping arrangement 36.

A method of purging the combustor assembly 14 of the gas turbine engine 10 is provided to avoid potential damage to the liquid fuel manifold 34 during a combustor assembly purging process, such as a purge credit mode. In one embodiment, the one or more valve 38 is closed to inhibit flow of the liquid fuel to the liquid fuel manifold 34 during a purge operation of the combustor assembly 14. As described above, a slight leaked portion may persist through the valve(s). The liquid fuel manifold 34 is pressurized with a liquid from the liquid seal pump 56 that operates at a low power, yet providing a pumped liquid that is greater than the internal pressure of the liquid fuel piping arrangement 36. By employing a low power pump integrated in the fuel supply system 20, cost-effective and efficient protection of the liquid fuel manifold 34 is achieved.

While the invention has been described in detail in connection with only a limited number of embodiments, it should be readily understood that the invention is not limited to such disclosed embodiments.

Accordingly, the invention is not to be seen as limited by the foregoing description, but is only limited by the scope of the appended claims.

## Claims

1. A fuel purge system (40) for a gas turbine engine (10) comprising a water manifold, a water distribution line (50) and a water valve (52), said fuel purge system (40) comprising:
a liquid fuel manifold (34) adapted to be fluidly connected to a liquid fuel supply (32) with a liquid fuel piping arrangement (36) comprising one or more valves (38) and to a combustor assembly (14) and configured to receive a liquid fuel from the fuel supply (32) and distribute the liquid fuel to the combustor assembly (14);
a liquid fuel valve (38) disposed between the fuel supply and the fuel manifold; and
a liquid pump (56) adapted to be fluidly connected to a liquid supply (44) and to the liquid fuel manifold and configured to receive a liquid from the liquid supply (44) and distribute the liquid to the liquid fuel manifold for pressurization of the liquid fuel manifold during a purge operation of the combustor assembly, wherein
the liquid comprises water and
a water injection pump (48) adapted to be in fluid communication with the liquid supply and the water manifold and configured to receive water from the liquid supply (44) and distribute the water to the water manifold along the water distribution line (50) during an open state of the water valve (52) located between the water injection pump and the water manifold and to the fuel manifold; wherein
the liquid pump is a water seal pump configured to be employed when the water injection pump (48) is not in use and is configured to pump liquid to the liquid fuel manifold to pressurize components of said liquid fuel manifold.

2. The fuel purge system of claim 1, wherein the liquid comprises demineralized water.

3. The fuel purge system of any preceding claim, wherein the liquid fuel supply (32) is fluidly coupled to the liquid fuel manifold (34) with a liquid fuel piping arrangement (36), and the liquid pump (56) is configured to pump liquid at a pressure exceeding an internal pressure of the liquid fuel piping arrangement (36).

4. The fuel purge system of claim 1, wherein the liquid pump is adapted to be fluidly connected to the water valve (52) and configured to pump water during a closed state of the water valve.

5. The fuel purge system of any preceding claim, wherein the liquid is pumped at a pressure of at least 13789 Pa (2 psig).

6. The fuel purge system of any of claims 1 to 5, wherein the liquid is pumped at a pressure of at least 20684 Pa (3 psig).

7. The fuel purge system of any preceding claim, wherein the liquid is distributed to the fuel manifold during a closed condition of the liquid fuel valve to reduce a leaked portion of the liquid fuel from entering the fuel manifold.

8. A method of purging a gas turbine engine (10) comprising:
closing a liquid fuel valve (38) located between a liquid fuel supply (32) and a liquid fuel manifold (34);
closing a water injection pump (48) configured to receive water from a liquid supply (44) and distribute water to a water manifold and the fuel manifold; and
pressurizing the fuel manifold with water from liquid supply (44) by means of a liquid pump (56) during a purge operation of a combustor assembly (14).

9. The method of claim 8, wherein the liquid fuel supply (32) is fluidly coupled to the liquid fuel manifold (34) with a liquid fuel piping arrangement (36), and the liquid pumped by the liquid pump (56) exceeds an internal pressure of the liquid fuel piping arrangement (36).

10. The method of claim 9, wherein the water is demineralized water.

11. The method of claim 8, 9 or 10, further comprising pumping the water at a pressure of at least 13789 Pa (2 psig).

12. The method of claim 8, 9 or 10, further comprising pumping the water at a pressure of at least 20684 Pa (3 psig).

13. The method of any of claims 9 to 12, wherein water injection pump (48) is in fluid communication with the liquid supply and a water manifold and receives water from the liquid supply and distributes the water to the water manifold along a water distribution line (50) during an open state of a water valve (52) located between the water injection pump and the water manifold.

14. The method of any of claims 9 to 13, wherein the liquid pumped by the liquid pump is separated into a first stream and a second stream, the first stream routed to the fuel manifold, the second stream routed to the water manifold.

## Patentansprüche

1. Brennstoffspülsystem (40) für ein Gasturbinentriebwerk (10), umfassend einen Wasserverteiler, eine Wasserverteilungsleitung (50) und ein Wasserventil (52), das Brennstoffspülsystem (40) umfassend:
einen Flüssigbrennstoffverteiler (34), der angepasst ist, um mit einer Flüssigbrennstoffversorgung (32) mit einer Flüssigbrennstoffrohrleitungsanordnung (36), umfassend ein oder mehrere Ventile (38), und mit einer Brennkammeranordnung (14) fluidisch verbunden zu werden, und konfiguriert ist, um einen Flüssigbrennstoff von der Brennstoffversorgung (32) aufzunehmen und den Flüssigbrennstoff an die Brennkammeranordnung (14) zu verteilen;
ein Flüssigbrennstoffventil (38), das zwischen der Brennstoffversorgung und dem Brennstoffverteiler eingerichtet ist; und
eine Flüssigkeitspumpe (56), die angepasst ist, um mit einer Flüssigkeitsversorgung (44) und mit dem Flüssigbrennstoffverteilerfluidisch verbunden zu werden, und konfiguriert ist, um eine Flüssigkeit von der Flüssigkeitsversorgung (44) aufzunehmen und die Flüssigkeit an den Flüssigbrennstoffverteiler für eine Druckbeaufschlagung des Flüssigbrennstoffverteilers während eines Spülvorgangs der Brennkammeranordnung zu verteilen, wobei
die Flüssigkeit Wasser umfasst, und
eine Wassereinspritzpumpe (48) angepasst ist, um in Fluidverbindung mit der Flüssigkeitsversorgung und dem Wasserverteiler zu stehen, und konfiguriert ist, um Wasser aus der Flüssigkeitsversorgung (44) aufzunehmen, und das Wasser an den Wasserverteiler entlang der Wasserverteilungsleitung (50) während eines offenen Zustands des Wasserventils (52), das sich zwischen der Wassereinspritzpumpe und dem Wasserverteiler befindet, und an den Brennstoffverteiler zu verteilen; wobei
die Flüssigkeitspumpe eine Wasserdichtungspumpe ist, die konfiguriert ist, um eingesetzt zu werden, wenn die Wassereinspritzpumpe (48) nicht in Gebrauch ist, und konfiguriert ist, um Flüssigkeit zu dem Flüssigbrennstoffverteiler zu pumpen, um Komponenten des Flüssigbrennstoffverteilers druckzubeaufschlagen.

2. Brennstoffspülsystem nach Anspruch 1, wobei die Flüssigkeit demineralisiertes Wasser umfasst.

3. Brennstoffspülsystem nach einem der vorstehenden Ansprüche, wobei die Flüssigbrennstoffversorgung (32) mit dem Flüssigbrennstoffverteiler (34) über eine Flüssigbrennstoffrohrleitungsanordnung (36) fluidisch gekoppelt ist, und die Flüssigkeitspumpe (56) konfiguriert ist, um, Flüssigkeit mit einem Druck, der einen Innendruck der Flüssigbrennstoffrohrleitungsanordnung (36) übersteigt, zu pumpen.

4. Brennstoffspülsystem nach Anspruch 1, wobei die Flüssigkeitspumpe angepasst ist, um mit dem Wasserventil (52) fluidisch verbunden zu werden, und konfiguriert ist, um Wasser während eines geschlossenen Zustands des Wasserventils zu pumpen.

5. Brennstoffspülsystem nach einem der vorstehenden Ansprüche, wobei die Flüssigkeit mit einem Druck von mindestens 13789 Pa (2 psig) gepumpt wird.

6. Brennstoffspülsystem nach einem der Ansprüche 1 bis 5, wobei die Flüssigkeit mit einem Druck von mindestens 20684 Pa (3 psig) gepumpt wird.

7. Brennstoffspülsystem nach einem der vorstehenden Ansprüche, wobei die Flüssigkeit an den Brennstoffverteiler während eines geschlossenen Zustands des Flüssigbrennstoffventils verteilt wird, um einen austretenden Anteil des Flüssigbrennstoffs vom Eintreten in den Brennstoffverteiler zu mindern.

8. Verfahren zum Spülen eines Gasturbinentriebwerks (10), umfassend:
Schließen eines Flüssigbrennstoffventils (38), das sich zwischen einer Flüssigbrennstoffversorgung (32) und einem Flüssigbrennstoffverteiler (34) befindet;
Schließen einer Wassereinspritzpumpe (48), die konfiguriert ist, um Wasser aus einer Flüssigkeitsversorgung (44) aufzunehmen und Wasser an einen Wasserverteiler und den Brennstoffverteiler zu verteilen; und
Druckbeaufschlagen des Brennstoffverteilers mit Wasser aus einer Flüssigkeitsversorgung (44) mittels einer Flüssigkeitspumpe (56) während eines Spülvorgangs einer Brennkammeranordnung (14).

9. Verfahren nach Anspruch 8, wobei die Flüssigbrennstoffversorgung (32) mit dem Flüssigbrennstoffverteiler (34) über eine Flüssigbrennstoffrohrleitungsanordnung (36) fluidisch gekoppelt ist, und die Flüssigkeit, die durch die Flüssigkeitspumpe (56) gepumpt wird, einen Innendruck der Flüssigbrennstoffrohrleitungsanordnung (36) übersteigt.

10. Verfahren nach Anspruch 9, wobei das Wasser demineralisiertes Wasser umfasst.

11. Verfahren nach Anspruch 8, 9 oder 10, ferner umfassend das Pumpen des Wassers bei einem Druck von mindestens 13789 Pa (2 psig).

12. Verfahren nach Anspruch 8, 9 oder 10, ferner umfassend das Pumpen des Wassers bei einem Druck von mindestens 20684 Pa (3 psig).

13. Verfahren nach einem der Ansprüche 9 bis 12, wobei die Wassereinspritzpumpe (48) in Fluidverbindung mit der Flüssigkeitsversorgung und einem Wasserverteiler steht, und ein Wasserverteiler Wasser aus der Flüssigkeitsversorgung aufnimmt, und das Wasser an den Wasserverteiler entlang einer Wasserverteilungsleitung (50) während eines offenen Zustands eines Wasserventils (52), das sich zwischen der Wassereinspritzpumpe und dem Wasserverteiler befindet, verteilt.

14. Verfahren nach einem der Ansprüche 9 bis 13, wobei die Flüssigkeit, die durch die Flüssigkeitspumpe gepumpt wird, in einen ersten Strom und einen zweiten Strom getrennt wird, wobei der erste Strom zu dem Brennstoffverteiler geleitet wird und der zweite Strom zu dem Wasserverteiler geleitet wird.

## Revendications

1. Système de purge de carburant (40) pour un moteur à turbine à gaz (10) comprenant un collecteur d'eau, une ligne de distribution d'eau (50) et une vanne d'eau (52), ledit système de purge de carburant (40) comprenant :
un collecteur de carburant liquide (34) adapté pour être raccordé de manière fluidique à une alimentation en carburant liquide (32) avec une tuyauterie de carburant liquide (36) comprenant une ou plusieurs vannes (38) et à un ensemble de chambre de combustion (14) et conçu pour recevoir un carburant liquide provenant de l'alimentation en carburant (32) et distribuer le carburant liquide à l'ensemble de chambre de combustion (14) ;
une vanne de carburant liquide (38) disposée entre l'alimentation en carburant et le collecteur de carburant ; et
une pompe hydraulique (56) adaptée pour être raccordée de manière fluidique à une alimentation en liquide (44) et au collecteur de carburant liquide et conçue pour recevoir un liquide provenant de l'alimentation en liquide (44) et distribuer le liquide au collecteur de carburant liquide pour la pressurisation du collecteur de carburant liquide pendant une opération de purge de l'ensemble de la chambre de combustion, dans lequel
le liquide comprend de l'eau et
une pompe d'injection d'eau (48) adaptée pour être en communication fluidique avec l'alimentation en liquide et le collecteur d'eau et conçue pour recevoir de l'eau provenant de l'alimentation en liquide (44) et distribuer l'eau au collecteur d'eau le long de la ligne de distribution d'eau (50) pendant un état ouvert de la vanne d'eau (52) située entre la pompe d'injection d'eau et le collecteur d'eau et vers le collecteur de carburant ; dans lequel
la pompe hydraulique est une pompe à joint hydraulique conçue pour être utilisée lorsque la pompe d'injection d'eau (48) n'est pas en cours d'utilisation et est conçue pour pomper du liquide vers le collecteur de carburant liquide afin de pressuriser les composants dudit collecteur de carburant liquide.

2. Système de purge de carburant selon la revendication 1, dans lequel le liquide comprend de l'eau déminéralisée.

3. Système de purge de carburant selon l'une quelconque revendication précédente, dans lequel l'alimentation en carburant liquide (32) est accouplée de manière fluidique au collecteur de carburant liquide (34) avec une tuyauterie de carburant liquide (36), et la pompe hydraulique (56) est conçue pour pomper du liquide à une pression dépassant une pression interne de la tuyauterie de carburant liquide (36).

4. Système de purge de carburant selon la revendication 1, dans lequel la pompe hydraulique est adaptée pour être raccordée de manière fluidique à la vanne d'eau (52) et conçue pendant un état fermé de la vanne d'eau.

5. Système de purge de carburant selon l'une quelconque revendication précédente, dans lequel le liquide est pompé à une pression d'au moins 13 789 Pa (2 psig).

6. Système de purge de carburant selon l'une quelconque des revendications 1 à 5, dans lequel le liquide est pompé à une pression d'au moins 20 684 Pa (3 psig).

7. Système de purge de carburant selon l'une quelconque revendication précédente, dans lequel le liquide est distribué au collecteur de carburant pendant une condition fermée de la vanne de carburant liquide afin d'empêcher une fuite de carburant liquide de pénétrer dans le collecteur de carburant.

8. Procédé de purge d'un moteur à turbine à gaz (10), comprenant :
la fermeture d'une vanne de carburant liquide (38) située entre l'alimentation en carburant liquide (32) et le collecteur de carburant liquide (34) ;
la fermeture d'une pompe d'injection d'eau (48) conçue pour recevoir de l'eau provenant d'une alimentation en liquide (44) et distribuer de l'eau à un collecteur d'eau et au collecteur de carburant ; et
la pressurisation du collecteur de carburant avec de l'eau provenant d'une alimentation en liquide (44) au moyen d'une pompe hydraulique (56) pendant une opération de purge d'un ensemble de chambre de combustion (14).

9. Procédé selon la revendication 8, dans lequel l'alimentation en carburant liquide (32) est accouplée de manière fluidique au collecteur de carburant liquide (34) avec une tuyauterie de carburant liquide (36), et le liquide pompé par la pompe hydraulique (56) dépasse une pression interne de la tuyauterie de carburant liquide (36).

10. Procédé selon la revendication 9, dans lequel l'eau est de l'eau déminéralisée.

11. Procédé selon la revendication 8, 9 ou 10, comprenant en outre le pompage de l'eau à une pression d'au moins 13 789 Pa (2 psig).

12. Procédé selon la revendication 8, 9 ou 10, comprenant en outre le pompage de l'eau à une pression d'au moins 20 684 Pa (3 psig).

13. Procédé selon l'une quelconque des revendications 9 à 12, dans lequel une pompe d'injection d'eau (48) est en communication fluidique avec l'alimentation en liquide et un collecteur d'eau et reçoit de l'eau provenant de l'alimentation en liquide et distribue l'eau au collecteur d'eau le long d'une ligne de distribution d'eau (50) pendant un état ouvert d'une vanne d'eau (52) située entre la pompe d'injection d'eau et le collecteur d'eau.

14. Procédé selon l'une quelconque des revendications 9 à 13, dans lequel le liquide pompé par la pompe hydraulique est séparé en un premier flux et un second flux, le premier flux acheminé vers le collecteur de carburant, le second flux acheminé vers le collecteur d'eau.
